# EUROPEAN PATENT APPLICATION

(11) **EP 0 592 155 A1**
(43) Date of publication of application: **13.04.1994**
(21) Application number: 93307770.3
(22) Date of filing: 30.09.1993
(51) Int. Cl.: G06K 7/08, G06K 7/06, G07F 7/02, G07F 7/08, G06K 19/07

(54) **Credit card display system**

(30) Priority: 09.10.1992 US 959303
(71) Applicant: AT&T Corp., New York, NY 10013-2412 (US)
(72) Inventor: Blonder, Greg E., Summit, New Jersey 07901 (US)
(74) Representative: Buckley, Christopher Simon Thirsk

(57) **Abstract**

A card-oriented transaction system (10) is provided with the capability of communicating with the card user. Specifically, the system is provided with a user card (11) having a surface region (13) capable of receiving an erasable visual image, a card reader (14) capable of detecting the card and writing on the display surface, and a data processor (16) adapted for providing information to be written on the display surface. In a preferred embodiment, the erasable visual display surface (13) is a plastic film embedding droplets of oil containing reflecting magnetic flakes. The film can be laminated onto the user card and reset by a magnetic field in the plane of the major surface. Writing can be effected by application of a magnetic field perpendicular to the surface.

## Description

### Field of the Invention

This invention relates to card-oriented transaction systems such as credit card and debit card systems wherein a user card (typically wallet size) is used in conjunction with a data processing system to facilitate payment for goods or services. More specifically, the invention relates to improved card-oriented systems providing erasable visual images on the user card.

### Background of the Invention

Card-oriented transaction systems are widely used in credit and debit transactions to facilitate the conduct of business. For example a vast variety of things can be purchased using major credit cards and many retailers such as department stores and oil companies have their own specialized cards. Debit cards are used in applications varying from travel on subways to payment of highway and bridge tolls. Such systems typically utilize an information-bearing user card, a data processor, and a card reader for reading information on the card and transmitting the information to the processor.

A major shortcoming of existing systems is that they provide little or no information to the user. Thus in the absence of accounting more detailed than most people record, a credit card user after making a purchase does not know his total purchases since last payment nor the amount of credit remaining on his card. Similarly, one using a subway debit card may not know the unused balance remaining on his card. Such information is available in the processor, but it is not readily provided to the card user.

Systems could be provided which print a message on a separate piece of paper. However, such systems -- particularly at automated locations -- present added labor costs in maintaining supplies of paper and toner and introduce reliability problems when these supplies periodically run out.

### Summary of the Invention

A card-oriented transaction system is provided with the capability of communicating with the card user. Specifically, the system is provided with a user card having a surface region capable of receiving an erasable visual image, a card reader capable of detecting the card and writing on the display surface, and a data processor adapted for providing information to be written on the display surface. In a preferred embodiment, the erasable visual display surface is a plastic film embedding droplets of oil containing reflecting magnetic flakes. The film can be laminated onto the user card and reset by a magnetic field in the plane of the major surface. Writing can be effected by application of a magnetic field perpendicular to the surface.

### Brief Description of the Drawings

In the drawings:
FIG. 1 is a schematic diagram of a card-oriented transaction system;
FIG. 2 is a plan view of a preferred user card for the system of FIG. 1;
FIG. 3 is a cross section of the card of FIG. 2; and
FIG. 4 schematically illustrates a preferred card station for the system of FIG. 1.

### Detailed Description

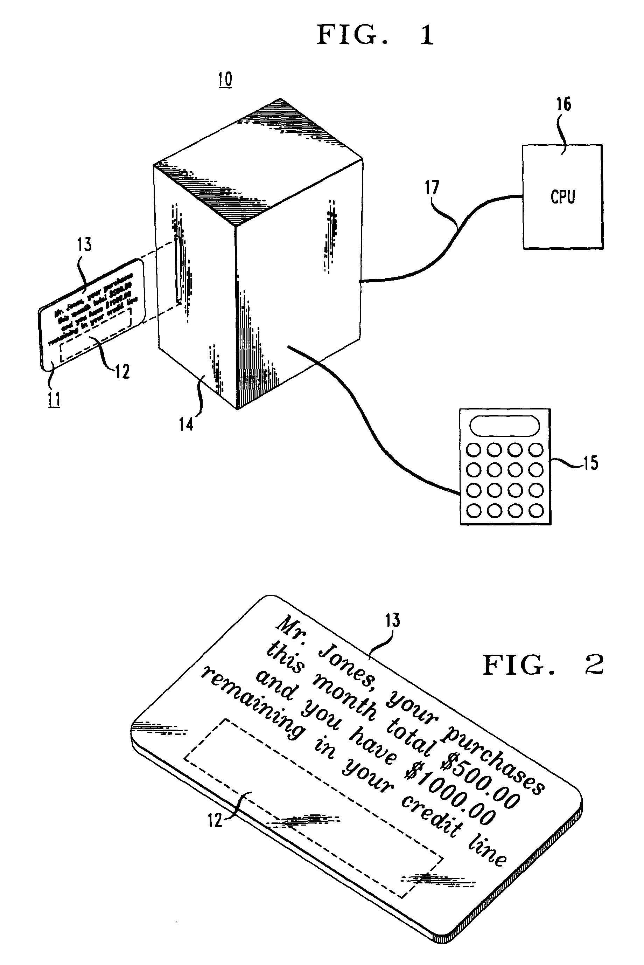

Referring to the drawings, FIG. 1 is a schematic diagram of a card-oriented transaction system 10 comprising, in essence, a user card 11 having both a permanent information region 12 and an erasable visual display surface 13. The two regions are not necessarily exclusive. A card station 14 is provided for detecting the presence of a card and transmitting a detection signal to a data processor 16. Advantageously, the card station detects a card by reading permanent information from the card and transmitting such information to processor 16. Permanent, in this context, means that the information is intended for use in a plurality of transactions. Such information typically includes identity of the proper user and the user's account number. Advantageously, station 14 is also provided with means, such as a keypad 15, for inputing information concerning the particular transaction being conducted. For example station 14 can be part of a telephone (not shown) and utilize the buttons of the phone as keypad 15. Typically processor 16 is remote from station 14, and transmission is over telephone lines 17.

Processor 16 can receive both permanent information -- such as the identity of the user -- and transaction information, e.g. the purchase of $ 200 worth of merchandise. In response to either or both of these two classes of information, the processor can return to the station 14 information to be presented as an erasable visual display on card surface 13, e.g. "Mr. Jones, your purchases this month total $500, and you have $1000 remaining in your credit line."

The enhanced functionality presented by such an erasable display surface 13 is manifold. For example, at a hotel the card can be a room key. When given out at the registration desk, the card could have a map to the room written on the display surface. When inserted into a door containing a card station 14, the map can be erased and replaced with an advertisement for the hotel's restaurant or a voucher for a free drink at the hotel's lounge. At a later time the surface could record the receipt of phone messages during the user's absence.

Other applications include increased functionality for a telephone credit card. For example, a telephone provided with a card station 14 could print on the card a telephone number sought by a directory assistance inquiry, a brief E-mail message, a current currency exchange rate table, or even a small map giving directions to a place of business. In this application the data processor can respond to information received from the telephone (an inquiry) to direct the station 14 to write a visual display on the display surface 13.

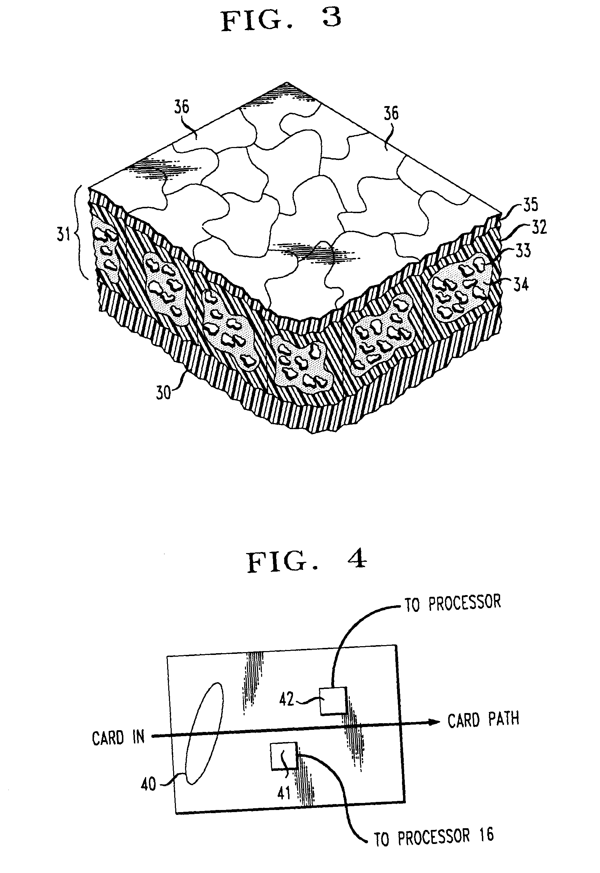

FIGS. 2 and 3 are plan and enlarged cross sectional views of a user card 11, provided with a preferred erasable display surface 13. The permanent record region 12, shown by dashed lines, can be any of the known arrangements for providing a permanent record on a user card, including a magnetic stripe, a bar code or even an embedded microprocessor including memory such as found in "smart" cards. The card is advantageously wallet-sized having a major surface less than about 3 inches by 4 inches.

The preferred erasable display surface 13 is better understood by reference to the cross section of FIG. 3. As illustrated, the card comprises a substrate 30, which can be plastic or paper, and a laminated display surface 31 comprising a plastic display film 32 in which is embedded small reflective magnetic flakes 33 within droplets of oil 34. In this context, the term flakes means that magnetic particles statistically present their largest reflecting surfaces in a direction aligned along their north-south axes. In the erased state (reset state), the flakes are all oriented with their major reflecting surfaces aligned in the plane of major surface of the card. This state is achieved by applying to the card a magnetic field in the plane of the major surface. In the reset state the surface has maximum reflectivity and appears relatively light. Advantageously, a wear resistant plastic coating 35 is applied to the outer surface of film 32.

The surface can be written on by applying a magnetic field perpendicular to the major surface. A field so oriented will reorient the reflecting flakes transverse to the surface, presenting a less reflective, darker area to the viewer. Writing can be effected by a magnetic stylus or by an array of AC driven wire loops having their axes perpendicular to surface 13.

A preferred plastic display film 32 for lamination to plastic cards is Magne-Rite film marketed by Eurand America, Inc., Dayton, Ohio. Iron containing flakes are encapsulated in cells 36 ranging from 5 micrometers to 50 micrometers in diameter. The erased film has an optical reflection density of about 0.5. After writing the reflection density increases to about 1.0.

FIG. 4 schematically illustrates a preferred card station comprising an erase loop 40, a card detector such as a permanent record read head 41, and a write head 42. In typical operation, as the card passes through loop 40 it is subjected to a magnetic field oriented parallel to the surface 13 which effectively erases the prior display and resets surface 13. Head 41 reads the permanent record 12, and this information (along with transaction information entered through keypad 15) is transmitted to processor 16. In response, processor 16 is provided with appropriate software to transmit to write head 42 -- preferably a matrix of coils for providing magnetic writing fields perpendicular to the major surface -- information for printing a desired erasable visual display on surface 13. Alternatively, the write head 42 can be under the control of a separate local processor (not shown) for writing a visual display of the particular vendor. In either case, the techniques for printing a desired visual image on a moving surface from a linear array are well known in the art. A field strength of 400 gauss applied for a few milliseconds produces maximum light absorption. The minimum frequency of an AC writing field depends on the stylus diameter and the card speed. A 40 KHz field is adequate for a 0.01-inch diameter stylus and a card speed of 40 inches/second.

Alternatively, the erasable display surface 13 can be a laser-light responsive material, such as that described in United States Patent No. 4,579,807 entitled "Optical Information Storage" issued to G. E. Blonder et al on April 1, 1986. With such material write head 42 can be a matrix of diode lasers. Yet further in the alternative, the erasable display surface can be a heat responsive material such as plastic embedded with droplets of thermochromic ink, and the write head can comprise an array of thermal heads.

## Claims

1. In a card-oriented transaction system of the type comprising a user card containing permanent information, a data processor, and a card station for detecting the presence of a user card and transmitting a detection signal to said data processor, the improvement wherein:
said user card includes an erasable visual display surface;
said card station includes means for writing on said visual display surface; and
said data processor is adapted to direct said card reader to write a visual display on said display surface.

2. A system according to claim 1 wherein said erasable visual display surface comprises a layer of plastic material having flakes of magnetic material in droplets of oil embedded within said plastic material.

3. A system according to claim 1 wherein said means for writing on said visual display surface comprises means for applying a magnetic field perpendicular to said display surface.

4. A system according to claim 1 of the type further comprising means for transmitting to said data processor information concerning a particular transaction being conducted with the use of said card.

5. A system according to claim 4 wherein said data processor further comprises means responsive to information concerning said particular transaction to direct said card reader to write said visual display.

6. A system according to claim 1 wherein said card station includes means for erasing a previous visual display on said card.

7. A system according to claim 6 wherein said card has a major surface and said means for erasing comprises means for applying a magnetic field oriented in the plane of a major surface of said card.

8. In a user card for a card-oriented transaction system of the type comprising a wallet-sized card containing permanent information, the improvement wherein:
said user card includes an erasable visual display surface comprising a layer of plastic material having embedded within droplets of oil containing flakes of magnetic material.

9. In a card station for a card-oriented transaction system of the type comprising a read head for reading permanent information on a user card having a major surface and means for entering data concerning a particular transaction, the improvement wherein:
said card station includes erasing means for applying a magnetic field oriented parallel to said major surface of said user card and writing means for applying a magnetic field perpendicular to said major surface.

10. In a telephone system of the type comprising a user oriented card containing permanent information, a data processor, and a telephone including a card reader for reading said information and transmitting it to said data processor, the improvement wherein:
said user card includes an erasable visual display surface;
said card reader includes means for writing on said visual display surface; and
said data processor includes means responsive to information received from said telephone to direct said card reader to write a visual display on said display surface.
